# EUROPÄISCHE PATENTSCHRIFT

(11) **EP 2 009 282 B1**
(45) Veröffentlichungstag und Bekanntmachung des Hinweises auf die Patenterteilung: **12.06.2013**
(21) Anmeldenummer: 08005547.8
(22) Anmeldetag: 25.03.2008
(51) Int. Cl.: F03D 11/00, F03D 9/00, F16H 35/10, F03D 7/02

(54) **Verfahren zum Anfahren einer Windenergieanlage nach einer Betriebspause und Windenergieanlage, die das Verfahren ausführen kann**
Method for starting a wind turbine after a stoppage and wind turbine for carrying out this method
Procédé de démarrage d'une éolienne après un arrêt de fonctionnement et éolienne pouvant exécuter ce procédé

(30) Priorität: 30.06.2007 DE 102007030494
(43) Veröffentlichungstag der Anmeldung: 31.12.2008
(73) Patentinhaber: Nordex Energy GmbH, 22848 Norderstedt (DE)
(72) Erfinder: Nitzpon, Joachim, 20255 Hamburg (DE); Karstens, Hauke, 22765 Hamburg (DE); Harms, Ulrich, 22399 Hamburg (DE)
(74) Vertreter: Hauck Patent- und Rechtsanwälte

(56) Entgegenhaltungen:
- EP-A1- 1 091 152
- EP-A2- 1 393 960
- US-A- 4 464 579
- LACROIX A ET AL: "Wind Energy: cold weather issues" 20000601, [Online] 1. Juni 2000 (2000-06-01), Seiten 1-17, XP008104783 Gefunden im Internet: URL:http://www.ecs.umass.edu/mie/labs/rerl /research/Cold_Weather_White_Pa per.pdf>

## Beschreibung

Die Erfindung betrifft ein Verfahren zum Anfahren einer Windenergieanlage nach einer Betriebspause und eine Windenergieanlage, die das Verfahren ausführen kann.

Windenergieanlagen weisen einen Triebstrang zur Übertragung des Drehmoments eines vom Wind angetriebenen Rotors der Windenergieanlage auf einen Generator auf, der elektrische Energie zur Verfügung stellt. Bei der am häufigsten anzutreffenden Bauweise wird der Generator mit einer wesentlich höheren Drehzahl als der Rotor betrieben, so daß ein Untersetzungsgetriebe im Triebstrang erforderlich ist. Derartige Getriebe sind in der Regel zwei- oder dreistufig ausgeführt und weisen eine Anzahl von ineinandergreifenden Verzahnungen auf. Sämtliche Komponenten eines derartigen Triebstrangs sind hohen mechanischen Belastungen ausgesetzt, insbesondere die Verzahnungen des Getriebes werden durch die hohen Drehmomente des Rotors stark belastet. Infolgedessen kommt es trotz intensiver Bemühungen der Windenergieanlagen- bzw. Getriebehersteller immer wieder zu Schäden im Triebstrangbereich, die zu einem Ausfall der Windenergieanlage führen können. Die hohen Belastungen führen auch zu einer begrenzten Lebensdauer einzelner Triebstrangskomponenten, die unter Umständen einen Austausch der Komponenten erfordern. Ein solcher Austausch ist mit einem hohen Kosten- und Zeitaufwand verbunden und führt zu einem unerwünschten Ausfall der Windenergieanlage.

Aus der Druckschrift "Wind Energy: Cold Weather Issues" von Lacroix et al. vom Juni 2000 ist bekannt geworden, eine Windenergieanlage bei niedrigen Temperaturen langsam anzufahren und das volle Drehmoment erst dann zuzulassen, wenn das Schmiermittel eine für den sicheren Betrieb erforderliche Temperatur erreicht hat.

Davon ausgehend ist es die Aufgabe der Erfindung, ein Verfahren anzugeben, das einen besonders schonenden Betrieb der Triebstrangkomponenten einer Windenergieanlage ermöglicht und eine lange Lebensdauer der Triebstrangkomponenten fördert, sowie eine Windenergieanlage, die das Verfahren ausführen kann.

Diese Aufgabe wird gelöst durch das Verfahren mit den Merkmalen des Anspruchs 1. Vorteilhafte Ausgestaltungen sind in den sich anschließenden Unteransprüchen angegeben.

Das erfindungsgemäße Verfahren dient zum Anfahren einer Windenergieanlage nach der Betriebspause, wobei die Windenergieanlage ein Getriebe im Triebstrang und eine Betriebsführung aufweist, die mindestens eine für die Belastung des Getriebes maßgebliche Betriebsgröße B der Windenergieanlage auf einen Sollwert B_{Soll} regeln kann, wobei nach einer Betriebspause der Sollwert B_{Soll} durch einen Maximalwert B_{Max} begrenzt wird, der in Abhängigkeit von einer gemessenen Temperatur T einer Getriebekomponente und/oder eines Schmiermittels für das Getriebe vorgegeben wird.

Die Betriebspause kann durch einen Stillstand oder Trudelbetrieb der Windenergieanlage in Folge geringer Windgeschwindigkeiten, Wartungsarbeiten, ein Abschalten der Windenergieanlage aufgrund einer externen Vorgabe oder eine sonstige Abweichung vom normalen Netzeinspeisebetrieb der Windenergieanlage begründet sein. Mit dem Anfahren der Windenergieanlage ist der Übergang von einer derartigen Betriebspause zum regulären Netzeinspeisebetrieb, ggf. bis zur maximal möglichen Leistung, gemeint.

Bei der für die Belastung des Getriebes maßgeblichen Betriebsgröße B kann es sich um eine beliebige Betriebsgröße der Windenergieanlage handeln, die einen wesentlichen Einfluß auf die Belastung des Getriebes hat.

Die Erfindung beruht auf der Erkenntnis, daß die erreichbare Lebensdauer der Triebstrangkomponenten insbesondere durch ein schonendes Anfahren der Windenergieanlage verlängert werden kann. Dies liegt daran, daß die Triebstrangkomponenten nach einer Betriebspause häufig nur unzureichend geschmiert werden, solange das Schmiermittel für das Getriebe nicht eine bestimmte Betriebstemperatur erreicht hat. In diesem Zeitraum unterliegen die Triebstrangkomponenten einem erhöhten Verschleiß. Dies gilt für beliebige Triebstrangkomponenten, die einer ausreichenden Schmierung bedürfen, beispielsweise für das Getriebe, einzelne Getriebestufen, einzelne Zahnräder oder Lager. Bei geringen Öltemperaturen ist auch das Getriebe selbst ausgekühlt. Wird die Windenergieanlage in diesem Zustand angefahren und sollen hohe Drehmomente oder Leistungen übertragen werden, können sich einzelne Komponenten des Getriebes oder einzelne Getriebebauteile unterschiedlich schnell erwärmen. Dadurch können Spannungen und Belastungen zwischen den Komponenten auftreten, die zu einem höheren Verschleiß führen können.

Der Sollwert B_{Soll}, auf den die Betriebsführung der Windenergieanlage die für die Belastung des Getriebes maßgebliche Betriebsgröße B regelt, kann beispielsweise von der Betriebsführung selbst auf Grundlage der vorherrschenden Windgeschwindigkeit oder extern, beispielsweise durch eine Windparksteuerung, vorgegeben werden.

Während des Anfahrens der Windenergieanlage nach der Betriebspause erhält der Sollwert B_{Soll} eine Obergrenze durch einen Maximalwert B_{Max}. Die Vorgabe des Maximalwerts B_{Max} erfolgt in Abhängigkeit von einer gemessenen Temperatur T eines Schmiermittels für das Getriebe und/oder von einer gemessenen Temperatur T einer Getriebekomponente.

Dieses Vorgehen führt zu einer Begrenzung der mechanischen Belastung der Triebstrangkomponenten, die an die zu einem bestimmten Zeitpunkt tatsächlich gegebene Schmierfähigkeit des Schmiermittels bzw. den Erwärmungszustand der überwachten Getriebekomponenten angepaßt ist. Die auf die Triebstrangkomponenten tatsächlich einwirkenden Belastungen werden dadurch so begrenzt, daß sie bei der gegebenen Schmierwirkung zu keinem übermäßigen Verschleiß führen. Dadurch verlängert sich die erreichbare Lebensdauer der Triebstrangkomponenten.

Die Abhängigkeit des Maximalwerts B_{Max} von der Temperatur T kann durch einen funktionalen Zusammenhang in der Windenergieanlage, bevorzugt in deren Betriebsführung, hinterlegt sein oder in Form einer Wertetabelle, die jeder Temperatur einen Maximalwert B_{Max} zuordnet.

Die Messung der Temperatur des Schmiermittels für das Getriebe kann grundsätzlich an beliebigen Orten erfolgen. Beispielsweise kann die Temperatur des Schmiermittels gezielt am Ort bestimmter Verschleißteile, wie beispielsweise nahe eines bestimmten Lagers, vorgenommen werden. Es können auch mehrere Temperatursensoren zum Einsatz kommen.

In einer Ausgestaltung ist die für die Belastung des Getriebes maßgebliche Betriebsgröße B die von der Windenergieanlage erzeugte elektrische Leistung. Bei der elektrischen Leistung kann es sich z.B. um eine Wirkleistung, eine Blindleistung oder eine Scheinleistung handeln. Die Regelung auf den Sollwert B_{Soll} durch die Betriebsführung kann in bekannter Weise durch Vorgabe eines Generatormoments oder eine entsprechende Blattwinkelverstellung erfolgen. Die von der Windenergieanlage erzeugte elektrische Leistung ist unmittelbar mit der Belastung des Getriebes verknüpft.

In einer Ausgestaltung ist die für die Belastung des Getriebes maßgebliche Betriebsgröße B ein Drehmoment im Triebstrang der Windenergieanlage. Auch diese Betriebsgröße ist unmittelbar mit der Belastung des Getriebes verknüpft. Das Drehmoment kann für eine beliebige Komponente des Triebstrangs ermittelt oder gemessen werden. Bevorzugt erfolgt eine Messung an der Abtriebswelle des Getriebes. Die Regelung dieses Drehmoments auf einen Sollwert B_{Soll} kann insbesondere durch Vorgabe eines entsprechenden Generatormoments erfolgen.

Bevorzugt wird die Temperatur T des Schmiermittels in einem Ölsumpf oder einer Ölleitung des Getriebes gemessen. Die Ölleitung kann beispielsweise ein Ölzulauf oder eine Ölsaugleitung sein und mit einem Ölsumpf verbunden sein. Bei derartigen Getrieben mit einem Ölsumpf kann das Öl zur Schmierung des Getriebes durch sich bewegende Getriebeteile, die in den Ölsumpf eintauchen, oder durch eine gezielte Förderung und Verteilung des Öls aus dem Ölsumpf zu den zu schmierenden Komponenten des Getriebes, beispielsweise mit Hilfe einer Ölpumpe, erfolgen. Durch die zentrale Messung der Temperatur in der Ölleitung oder dem Ölsumpf wird dem Verfahren eine Temperatur zugrundegelegt, die besonders einfach zu messen ist und die die Schmierfähigkeit des Öls für alle über die Ölleitung bzw. aus dem Ölsumpf versorgten Getriebeteile repräsentiert.

In einer weiteren Ausgestaltung des Verfahrens wird das Anfahren beendet, wenn die gemessene Temperatur T einer bestimmten Betriebstemperatur entspricht. Es wird somit keine Begrenzung der Betriebsgröße B mehr vorgegeben, wenn das Getriebe bzw. das Schmiermittel die gewünschte Betriebstemperatur erreicht hat. Die Belastungsbegrenzung wird damit auf das notwendige Maß beschränkt.

In einer weiteren Ausgestaltung des Verfahrens wird der Maximalwert B_{Max} nach der Betriebspause erhöht, bis er bei einer bestimmten Temperatur T₂ einen Nennwert B_{Nenn} der Windenergieanlage erreicht. Dadurch wird auch die Belastung der Triebstrangkomponenten mit steigender Wirksamkeit des Schmiermittels erhöht. Bei dem Nennwert B_{Nenn} kann es sich insbesondere um eine Nennleistung oder ein Nenndrehmoment handeln. Bevorzugt wird der Maximalwert B_{Max} nach der Betriebspause stetig erhöht.

In einer weiteren Ausgestaltung des Verfahrens weist der Maximalwert B_{Max} beim Anfahren der Windenergieanlage einen Anfangswert B_{Frei} auf. Es erfolgt somit keine Begrenzung des Sollwerts B_{Soll} auf Werte unterhalb des durch den Anfangswert B_{Frei} vorgegebenen Minimalwerts. Eine diesem Anfangswert Bᵣₑᵢ entsprechende Mindestbelastung der Triebstrangkomponenten ist folglich unabhängig von der Temperatur des Schmiermittels bzw. der Getriebekomponente zugelassen. Dadurch wird eine übermäßige Begrenzung der Betriebsgröße B vermieden.

Gemäß einer weiteren Ausgestaltung wird der Maximalwert B_{Max} nach dem Anfahren der Windenergieanlage bis zu einer vorgebbaren Temperatur T₁ konstant gehalten. In einem Zeitraum bis zum Erreichen der Temperatur T₁ wird somit keine Erhöhung der für die Belastung des Getriebes maßgeblichen Obergrenze vorgenommen. Dadurch wird sichergestellt, daß die Belastung der Triebstrangkomponenten erst dann erhöht wird, wenn das Schmiermittel in Folge der Temperatur T₁ eine bestimmte Mindestschmierfähigkeit erreicht.

In einer weiteren Ausgestaltung wird der Maximalwert B_{Max} in einem Abschnitt proportional zu der Temperatur T vorgegeben. Es erfolgt somit eine lineare Steigerung des Maximalwerts B_{Max} in Abhängigkeit von der Temperatur T. Dies entspricht einer gleichmäßigen, kontinuierlichen Rücknahme der Belastungsbegrenzung mit ansteigender Temperatur T. Es wird eine gleichmäßige Steigerung der zulässigen Belastung der Triebstrangkomponenten erreicht.

Gemäß einer weiteren Ausgestaltung wird der Maximalwert B_{Max} zwischen den Temperaturen T₁ und T₂ proportional zu der Temperatur vorgegeben. Der Abschnitt der gleichmäßigen Belastungsbegrenzungsrücknahme füllt somit den gesamten Zeitraum zwischen den beiden Temperaturen T₁ und T₂ aus.

Bei der Erfindung wird die Windenergieanlage erst angefahren, wenn ein minimaler Wert B_{Min} der für die Belastung des Getriebes maßgeblichen Betriebsgröße B zu erwarten ist. Der minimale Wert B_{Min} kann seinerseits von der Temperatur abhängig vorgegeben werden. Er kann jedoch auch einen festen, temperaturunabhängigen Wert haben. Der Wert B_{Min} kann so gewählt werden, daß die bei diesem Wert der Betriebsgröße auftretenden Belastungen der Triebstrangkomponenten bei der gegebenen Schmierfähigkeit des Schmiermittels ein zuverlässiges Mitdrehen sämtlicher Lagerkomponenten bewirkt. Anderenfalls kann es bei geringen Belastungen zu einem erhöhten Verschleiß von bei diesen Belastungen noch nicht zuverlässig arbeitenden Lagerkomponenten kommen. Diese Ausgestaltung trägt somit ebenfalls zu einer erhöhten Lebensdauer der Triebstrangkomponenten bei. .../8

Bei der Erfindung wird beim Anfahren der Windenergieanlage ein minimaler Wert B_{Min} der für die Belastung des Getriebes maßgeblichen Betriebsgröße B nicht unterschritten. Sinkt die für die Belastung des Getriebes maßgebliche Betriebsgröße B während des Anfahrens auf einen Wert unterhalb des minimalen Werts B_{Min} ab, kann das Anfahren abgebrochen werden. Beispielsweise im Falle sinkender Windgeschwindigkeiten nach dem Beginn des Anfahrens wird durch den Abbruch des Anfahrens sichergestellt, daß es nicht zu einem erhöhten Verschleiß in Folge festsitzender Lagerelemente kommt.

Die obige Aufgabe wird ebenfalls gelöst durch die Windenergieanlage mit den Merkmalen des Anspruchs 11. Vorteilhafte Ausgestaltungen sind in den sich anschließenden Unteransprüchen angegeben.

Die erfindungsgemäße Windenergieanlage hat
- ein Getriebe im Triebstrang,
- mindestens einen Temperatursensor zur Messung einer Temperatur T einer Getriebekomponente und/oder eines Schmiermittels für das Getriebe und
- eine Betriebsführung, die mindestens eine für die Belastung des Getriebes maßgebliche Betriebsgröße B der Windenergieanlage auf einen Sollwert B_{Soll} regeln kann,
- wobei die Betriebsführung eine Einrichtung zur Bestimmung eines Maximalwert B_{Max} in Abhängigkeit von einer von dem mindestens einen Temperatursensor ermittelten Temperatur T aufweist, und
- wobei die Betriebsführung den Maximalwert B_{Max} zur Begrenzung des Sollwerts B_{Soll} vorgeben kann.

Die erfindungsgemäße Windenergieanlage ist insbesondere zur Ausführung des erfindungsgemäßen Verfahrens geeignet.

Bei der Einrichtung zur Bestimmung des Maximalwerts B_{Max} kann es sich insbesondere um geeignete Programme oder Programmbestandteile handeln, die zum Betrieb der Windenergieanlage auf einem Steuerrechner ausgeführt werden.

Die Erfindung wird nachfolgend anhand eines in einer Figur dargestellten Ausführungsbeispiels des Verfahrens näher erläutert. In dem Ausführungsbeispiel ist die für die Belastung des Getriebes maßgebliche Betriebsgröße B die von der Windenergieanlage bereitgestellte elektrische Leistung, die im folgenden wie üblich mit P bezeichnet wird.

Die einzige Figur zeigt ein Diagramm zur Abhängigkeit des Maximalwerts P_{Max} der Leistung von der Temperatur T eines Schmiermittels für das Getriebe.

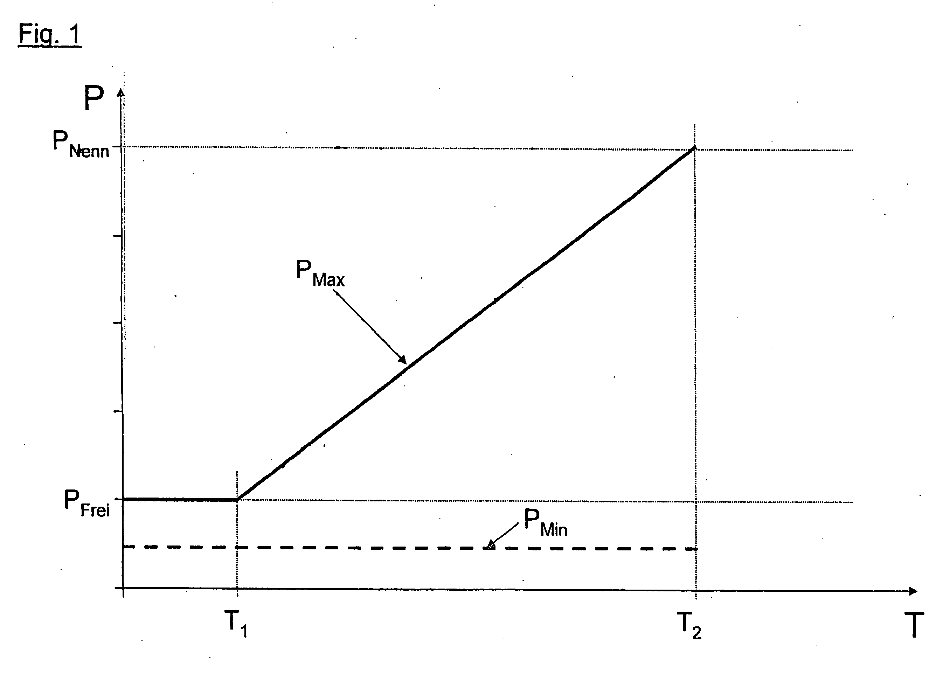

Auf der Abszisse des in Fig. 1 gezeigten Koordinatensystems ist die Temperatur eines Schmiermittels für das Getriebe einer Windenergieanlage aufgetragen. Im Beispiel beruht die Temperatur auf einem Meßwert, der mit einem geeigneten Temperaturfühler in einem Ölsumpf des Getriebes gemessen wird. Auf der Ordinate des Koordinatensystems ist die von der Windenergieanlage bereitgestellte elektrische Leistung P verzeichnet. Jeder Temperatur T ist aufgrund des in dem Diagramm dargestellten Zusammenhangs ein Maximalwert der Leistung P_{Max} zugeordnet, der zur Begrenzung des Sollwerts P_{Soll} der Leistung verwendet wird. Weiterhin ist ein Minimalwert P_{Min} der Leistung eingezeichnet, der eine temperaturunabhängige Untergrenze für die Leistung darstellt.

Die Kurve für den Maximalwert P_{Max} beginnt bei einer minimalen Temperatur am linken Rand des Diagramms bei einem Anfangswert P_{Frei}, der im Beispiel etwa 1/5 der ebenfalls eingezeichneten Nennleistung P_{Nenn} der Windenergieanlage beträgt. Unabhängig von der Temperatur des Schmiermittels wird der Sollwert der Leistung P_{Soll} nicht auf Werte unterhalb dieser stets freigegebenen Leistung P_{Frei} begrenzt. Der Maximalwert P_{Max} wird bis zum Erreichen einer ersten Temperatur T₁ konstant auf dem Wert P_{Frei} gehalten. Oberhalb der Temperatur T₁ erfolgt ein Anstieg des Maximalwerts P_{Max} proportional zur Temperatur, bis der Maximalwert P_{Max} bei der zweiten Temperatur T₂ den Nennwert P_{Nenn} der Leistung der Windenergieanlage erreicht. Zu diesem Zeitpunkt ist das Anfahren der Windenergieanlage abgeschlossen und es erfolgt keine weitere Begrenzung der elektrischen Leistung durch den Maximalwert P_{Max}.

Der eingezeichnete Minimalwert P_{Min} der Leistung weist einen konstanten Wert auf, der ungefähr 50 Prozent der Leistung P_{Frei} beträgt. Während des Anfahrens der Windenergieanlage wird überwacht, ob die tatsächlich bereitgestellte Leistung P den Minimalwert P_{Min} übersteigt. Ist dies nicht der Fall, wird das Anfahren abgebrochen und die Windenergieanlage wird abgeschaltet. Entsprechend wird der Anfahrvorgang nur gestartet, wenn aufgrund der vorherrschenden Betriebsbedingungen, insbesondere der Windgeschwindigkeit, ein Überschreiten der minimalen Leistung P_{Min} erwartet werden kann.

Die für die Ausführung des Verfahrens erforderlichen Leistungswerte werden durch eine Messung oder Berechnung der bereitgestellten elektrischen Leistung bestimmt. Dabei kann eine kontinuierliche Messung vorgenommen und in aufeinanderfolgenden Zeitintervallen von 30 Sekunden Dauer ein Mittelwert der bereitgestellten elektrischen Leistung P gebildet werden, der der weiteren Betriebsführung zugrunde gelegt werden kann.

## Patentansprüche

1. Verfahren zum Anfahren einer Windenergieanlage nach einer Betriebspause, wobei die Windenergieanlage ein Getriebe im Triebstrang und eine Betriebsführung aufweist, die mindestens eine für die Belastung des Getriebes maßgebliche Betriebsgröße B der Windenergieanlage auf einen Sollwert B_{Soll} regeln kann, wobei nach der Betriebspause der Sollwert B_{Soll} durch einen Maximalwert B_{Max} begrenzt wird, der in Abhängigkeit von einer gemessenen Temperatur T einer Getriebekomponente und/oder eines Schmiermittels für das Getriebe vorgegeben wird, **dadurch gekennzeichnet, dass** die Windenergieanlage erst angefahren wird, wenn ein minimaler Wert B_{Min} der für die Belastung des Getriebes maßgeblichen Betriebsgröße B zu erwarten ist und dieser minimale Wert B_{Min} beim Anfahren der Windenergieanlage nicht unterschritten wird.

2. Verfahren nach Anspruch 1, **dadurch gekennzeichnet, daß** eine der für die Belastung des Getriebes maßgeblichen Betriebsgrößen B die von der Windenergieanlage erzeugte elektrische Leistung ist.

3. Verfahren nach Anspruch 1 oder 2, **dadurch gekennzeichnet, daß** eine der für die Belastung des Getriebes maßgeblichen Betriebsgrößen B ein Drehmoment im Triebstrang der Windenergieanlage ist.

4. Verfahren nach einem der Ansprüche 1 bis 3, **dadurch gekennzeichnet, daß** die Temperatur T des Schmiermittels in einem Ölsumpf oder einer Ölleitung des Getriebes gemessen wird.

5. Verfahren nach einem der Ansprüche 1 bis 4, **dadurch gekennzeichnet, daß** das Anfahren beendet wird, wenn die gemessene Temperatur T einer bestimmten Betriebstemperatur entspricht.

6. Verfahren nach einem der Ansprüche 1 bis 5, **dadurch gekennzeichnet, daß** der Maximalwert B_{Max} nach einer Betriebspause erhöht wird, bis er bei einer bestimmten Temperatur T₂ einen Nennwert B_{Nenn} der Windenergieanlage erreicht.

7. Verfahren nach einem der Ansprüche 1 bis 6, **dadurch gekennzeichnet, daß** der Maximalwert B_{Max} beim Anfahren der Windenergieanlage einen Anfangswert B_{Frei} aufweist.

8. Verfahren nach einem der Ansprüche 1 bis 7, **dadurch gekennzeichnet, daß** der Maximalwert B_{Max} nach dem Anfahren der Windenergieanlage bis zu einer vorgebbaren Temperatur T₁ konstant gehalten wird.

9. Verfahren nach einem der Ansprüche 1 bis 8, **dadurch gekennzeichnet, daß** der Maximalwert B_{Max} in einem Abschnitt proportional zu der Temperatur T vorgegeben wird.

10. Verfahren nach Anspruch 9, **dadurch gekennzeichnet, daß** der Maximalwert B_{Max} zwischen den Temperaturen T₁ und T₂ proportional zu der Temperatur T vorgegeben wird.

11. Windenergieanlage mit
- einem Getriebe im Triebstrang,
- mindestens einem Temperatursensor zur Messung einer Temperatur T einer Getriebekomponente und/oder eines Schmiermittels für das Getriebe und
- einer Betriebsführung, die mindestens eine für die Belastung des Getriebes maßgebliche Betriebsgröße B der Windenergieanlage auf einen Sollwert B_{Soll} regeln kann,
- wobei die Betriebsführung eine Einrichtung zur Bestimmung eines Maximalwert B_{Max} in Abhängigkeit von einer von dem mindestens einen Temperatursensor ermittelten Temperatur T aufweist,
- wobei die Betriebsführung den Maximalwert B_{Max} zur Begrenzung des Sollwerts B_{Soll} vorgeben kann,
- wobei die Betriebsführung die Windenergieanlage gezielt erst dann anfahren kann, wenn ein minimaler Wert B_{Min} der für die Belastung des Getriebes maßgeblichen Betriebsgröße B erreichbar ist, und
- wobei die Betriebsführung die Windenergieanlage beim Anfahren so steuern kann, daß der minimale Wert B_{Min} nicht unterschritten wird.

12. Windenergieanlage nach Anspruch 11, **dadurch gekennzeichnet, daß** eine der für die Belastung des Getriebes maßgeblichen Betriebsgrößen B der Windenergieanlage die von der Windenergieanlage erzeugte elektrische Leistung ist.

13. Windenergieanlage nach Anspruch 11 oder 12, **dadurch gekennzeichnet, daß** eine der für die Belastung des Getriebes maßgeblichen Betriebsgrößen B der Windenergieanlage ein Drehmoment im Triebstrang der Windenergieanlage ist.

14. Windenergieanlage nach einem der Ansprüche 11 bis 13, **dadurch gekennzeichnet, daß** der mindestens eine Temperatursensor in einem Ölsumpf oder einer Ölleitung des Getriebes angeordnet ist.

15. Windenergieanlage nach einem der Ansprüche 11 bis 14, **dadurch gekennzeichnet, daß** die Betriebsführung das Anfahren beenden kann, wenn die gemessene Temperatur T einer bestimmten Betriebstemperatur entspricht.

16. Windenergieanlage nach einem der Ansprüche 11 bis 15, **dadurch gekennzeichnet, daß** die Einrichtung zur Bestimmung des Maximalwerts B_{Max} den Maximalwert B_{Max} nach einer Betriebspause erhöhen kann, bis er bei einer bestimmten Temperatur T₂ einen Nennwert B_{Nenn} der Windenergieanlage erreicht.

17. Windenergieanlage nach einem der Ansprüche 11 bis 16, **dadurch gekennzeichnet, daß** die Einrichtung zur Bestimmung des Maximalwerts B_{Max} beim Anfahren der Windenergieanlage einen Anfangswert B_{Frei} vorgeben kann.

18. Windenergieanlage nach einem der Ansprüche 11 bis 17, **dadurch gekennzeichnet, daß** die Einrichtung zur Bestimmung des Maximalwerts B_{Max} nach dem Anfahren der Windenergieanlage den Maximalwert B_{Max} bis zu einer vorgebbaren Temperatur T₁ konstant halten kann.

19. Windenergieanlage nach einem der Ansprüche 11 bis 18, **dadurch gekennzeichnet, daß** die Einrichtung zur Bestimmung des Maximalwerts B_{Max} den Maximalwert B_{Max} in einem Abschnitt proportional zu der Temperatur T vorgeben kann.

20. Windenergieanlage nach Anspruch 19, **dadurch gekennzeichnet, daß** die Einrichtung zur Bestimmung des Maximalwerts B_{Max} den Maximalwert B_{Max} zwischen den Temperaturen T₁ und T₂ proportional zu der Temperatur vorgeben kann.

## Claims

1. A process for starting a wind turbine after a shutdown, wherein the wind turbine has a transmission in the drive train and an operating control which can control at least one parameter B of the wind turbine decisive for the load of the transmission to a set point B_{Soll}, wherein after the shutdown, the set point B_{Soll} is limited by a maximum value B_{Max}, which is specified in dependency on a measured temperature T of a transmission component and/or of a lubricant for the transmission, **characterised in that** that the wind turbine is started up not before a minimum value Bₘᵢₙ of the parameter B decisive for the load of the transmission is to be expected and this minimum value Bₘᵢₙ is not undercut during starting the wind turbine.

2. A process according to claim 1, **characterised in that** one of the parameters B decisive for the load of the transmission is the electric power generated by the wind turbine.

3. A process according to claim 1 or 2, **characterised in that** one of the parameters B decisive for the load of the transmission is a torque in the drive train of the wind turbine.

4. A process according to any one of claims 1 to 3, **characterised in that** the temperature T of the lubricant is measured in an oil sump or an oil pipe of the transmission.

5. A process according to any one of claims 1 to 4, **characterised in that** the starting is ended when the measured temperature T corresponds to a certain operating temperature.

6. A process according to any one of claims 1 to 5, **characterised in that** the maximum value B_{Max} is increased after a shutdown, until at a certain temperature T₂ it reaches a rated value B_{Nenn} of the wind turbine.

7. A process according to any one of claims 1 to 6, **characterised in that** during starting the wind turbine the maximum value B_{Max} has an initial value B_{Frei}.

8. A process according to any one of claims 1 to 7, **characterised in that** the maximum value B_{Max} is kept constant up to a presettable temperature T₁ after starting the wind turbine.

9. A process according to any one of claims 1 to 8, **characterised in that** the maximum value B_{Max} is specified to be proportional to the temperature T in a section.

10. A process according to claim 9, **characterised in that** the maximum value B_{Max} is specified to be proportional to the temperature T between the temperatures T₁ and T₂.

11. A wind turbine with
• a transmission in the drive train,
• at least one temperature sensor for measuring a temperature T of a transmission component and/or of a lubricant for the transmission and
• an operating control, which can control at least one parameter B of the wind turbine decisive for the load of the transmission to a set point B_{Soll},
• wherein the operating control has a means for determination a maximum value B_{Max} in dependency on a temperature T detected by the at least one temperature sensor, and
• wherein the operating control can preset the maximum value B_{Max} for the limitation of the set point B_{Soll},
• wherein the operating control can start up the wind turbine specifically not before a minimum value Bₘᵢₙ of the parameter B decisive for the load of the transmission is accomplishable, and
• wherin the operating control can operate the wind turbine during starting such that the minimum value Bₘᵢₙ is not undercut.

12. A wind turbine according to claim 11, **characterised in that** one of the parameters B decisive for the load of the transmission is the electric power generated by the wind turbine.

13. A wind turbine according to claim 11 or 12, **characterised in that** one of the parameters B decisive for the load of the transmission is a torque in the drive train of the wind turbine.

14. A wind turbine according to any one of claims 11 to 13, **characterised in that** the at least one temperature sensor is arranged in an oil sump or an oil pipe of the transmission.

15. A wind turbine according to any one of claims 11 to 14, **characterised in that** the operating control can end the starting when the measured temperature T corresponds to a certain operating temperature.

16. A wind turbine according to any one of claims 11 to 15, **characterised in that** the means for determination of the maximum value B_{Max} can increase the maximum value B_{Max} after a shutdown, until at a certain temperature T₂ it reaches a rated value B_{Nenn} of the wind turbine.

17. A wind turbine according to any one of claims 11 to 16, **characterised in that** the means for determination of a maximum value B_{Max} can preset an initial value B_{Frei} during starting the wind turbine.

18. A wind turbine according to any one of claims 11 to 17, **characterised in that** the means for determination of a maximum value B_{Max} can keep the maximum value B_{Max} constant up to a presettable temperature T₁ after starting the wind turbine.

19. A wind turbine according to any one of claims 11 to 18, **characterised in that** the means for determination of a maximum value B_{Max} can specify the maximum value B_{Max} to be proportional to the temperature T in a section.

20. A wind turbine according to claim 19, **characterised in that** the means for determination of a maximum value B_{Max} can specify the maximum value B_{Max} to be proportional to the temperature T between the temperatures T₁ and T₂.

## Revendications

1. Procédé de démarrage d'une éolienne après une interruption d'exploitation, l'éolienne comportant une transmission dans la chaîne cinématique et une commande d' exploitation qui peut régler à une valeur de consigne Bₛₒₗₗ au moins une grandeur d'exploitation B de l'éolienne, déterminante pour la charge de la transmission, la valeur de consigne Bₛₒₗₗ étant, après l'interruption d' exploitation, limitée par une valeur maximale B_{Max} qui est définie en fonction d'une température T mesurée d'un composant de la transmission et/ou d'un lubrifiant pour la transmission, **caractérisé en ce que** l'éolienne n'est démarrée que si l'on doit prevue une valeur minimale B_{Min} de la grandeur d'exploitation B déterminante pour la charge de la transmission et s'il n'y a pas de reste inférieur de cette valeur minimale B_{Min} lors du démarrage de l'éolienne.

2. Procédé selon la revendication 1, **caractérisé en ce qu'**une des grandeurs d' exploitation B déterminantes pour la charge de la transmission est la puissance électrique produite par l'éolienne.

3. Procédé selon la revendication 1 ou 2, **caractérisé en ce qu'**une des grandeurs d' exploitation B déterminantes pour la charge de la transmission est un couple dans la chaîne cinématique de l'éolienne.

4. Procédé selon une des revendications 1 à 3, **caractérisé en ce que** la température T du lubrifiant est mesurée dans un fond à huile ou une conduite d'huile de la transmission.

5. Procédé selon une des revendications 1 à 4, **caractérisé en ce que** le démarrage est terminé quand la température T mesurée correspond à une température d' exploitation fixe.

6. Procédé selon une des revendications 1 à 5, **caractérisé en ce que** la valeur maximale B_{Max} est augmentée après une interruption d' exploitation jusqu'à ce qu'elle atteigne une valeur nominale B_{Nenn} de l'éolienne pour une température T₂ certain.

7. Procédé selon une des revendications 1 à 6, **caractérisé en ce que** lors du démarrage de l'éolienne la valeur maximale B_{Max} présente une valeur initiale B_{Frei}.

8. Procédé selon une des revendications 1 à 7, **caractérisé en ce que** la valeur maximale B_{Max} est maintenue constante après le démarrage de l'éolienne jusqu'à une température T₁ qui peut être fixe.

9. Procédé selon une des revendications 1 à 8, **caractérisé en ce que** la valeur maximale B_{Max} dans un tronçon est définie de façon proportionnelle à la température T.

10. Procédé selon la revendication 9, **caractérisé en ce que** la valeur maximale B_{Max} entre les températures T₁ et T₂ est définie de façon proportionnelle à la température T.

11. Éolienne, ayant
- une transmission dans la chaîne cinématique,
- au moins un capteur de température pour la mesure d'une température T d'un composant de la transmission et/ou d'un lubrifiant pour la transmission, et
- une commande d' exploitation qui peut régler à une valeur de consigne Bₛₒₗₗ au moins une grandeur d' exploitation B de l'éolienne, déterminante pour la charge de la transmission,
- la commande d' exploitation comportant un éqiupement pour la détermination d'une valeur maximale B_{Max} en fonction d'une température T détectée par le capteur de température au moins au nombre de un,
- la commande d' exploitation pouvant fixer la valeur maximale B_{Max} pour la limitation de la valeur de consigne Bₛₒₗₗ,
- la commande d' exploitation ne démarrant l'éolienne de façon ciblée que quand une valeur minimale B_{Min} de la grandeur d' exploitation B déterminante pour la charge de la transmission peut être atteinte, et
- la commande d' exploitation pouvant contrôler l'éolienne lors du démarrage de telle sorte qu'il n'y a pas reste inférieur de la valeur minimale B_{Min}.

12. Éolienne selon la revendication 11, **caractérisée en ce qu'**une des grandeurs d' exploitation B de l'éolienne déterminantes pour la charge de la transmission est la puissance électrique produite par l'éolienne.

13. Éolienne selon la revendication 11 ou 12, **caractérisée en ce qu'**une des grandeurs d' exploitation B de l'éolienne déterminantes pour la charge de la transmission est un couple dans la chaîne cinématique de l'éolienne.

14. Éolienne selon une des revendications 11 à 13, **caractérisée en ce que** le capteur de température au moins au nombre de un est disposé dans un fond à huile ou une conduite d'huile de la transmission.

15. Éolienne selon une des revendications 11 à 14, **caractérisée en ce que** la commande d' exploitation peut terminer le démarrage quand la température T mesurée correspond à une température d' exploitation fixe.

16. Éolienne selon une des revendications 11 à 15, **caractérisée en ce que** l' équipment pour la détermination de la valeur maximale B_{Max} peut augmenter la valeur maximale B_{Max} après une interruption d' exploitation jusqu'à ce qu'elle atteigne une valeur nominale B_{Nenn} de l'éolienne pour une température T₂ certain.

17. Éolienne selon une des revendications 11 à 16, **caractérisée en ce que** l' équipment pour la détermination de la valeur maximale B_{Max} peut fixer une valeur initiale B_{Frei} lors du démarrage de l'éolienne.

18. Éolienne selon une des revendications 11 à 17, **caractérisée en ce que** l' équipment pour la détermination de la valeur maximale B_{Max} peut, après le démarrage de l'éolienne, maintenir constante la valeur maximale B_{Max} jusqu'à une température T₁ qui peut être fixe.

19. Éolienne selon une des revendications 11 à 18, **caractérisée en ce que** l' équipment pour la détermination de la valeur maximale B_{Max} peut, dans un tronçon, définir la valeur maximale B_{Max} de façon proportionnelle à la température T.

20. Éolienne selon la revendication 19, **caractérisée en ce que** l'équipement pour la détermination de la valeur maximale B_{Max} peut définir la valeur maximale B_{Max} entre les températures T₁ et T₂ de façon proportionnelle à la température.
